# EUROPEAN PATENT SPECIFICATION

(11) **EP 2 602 842 B1**
(45) Date of publication and mention of the grant of the patent: **01.11.2017**
(21) Application number: 12186659.4
(22) Date of filing: 28.09.2012
(51) Int. Cl.: H01M 2/04, H01M 2/08

(54) **Battery Cell**
Batteriezelle
Cellule de batterie

(30) Priority: 09.12.2011 US 201161568997 P; 08.08.2012 US 201213569388
(43) Date of publication of application: 12.06.2013
(73) Proprietor: Samsung SDI Co., Ltd., Yongin-si, Gyeonggi-do 17084 (KR)
(72) Inventor: HONG, Sung-Ho, Gyeonggi-do (KR)
(74) Representative: Walaski, Jan Filip

(56) References cited:
- JP-A- 2006 073 457
- US-A1- 2004 033 416

## Description

The present disclosure relates to a battery cell, more particularly to a battery cell capable of improving safety and productivity.

Recently, a battery pack has been widely used as a power source of the portable electronic device. In addition, as a portable electronic device is used in various fields, demand for high-capacity battery packs has increased. Accordingly, in order to improve safety, various studies have been progressed.

In the studies, various battery pack shapes have been used, which may include a pouch type battery pack, a square shape battery pack or a cylindrical battery pack.

In the pouch type battery pack, in order to prevent a short caused by non-insulation of the pouch or a short caused by interference of an electrode lead, the entire bare cell is insulated using an insulator.

In general, an upper insulator and a lower insulator are composed of two parts. Therefore, the above-mentioned structure results in inefficiency and quality variation in terms of productivity as a result of an alignment problem of the two parts caused by manual assembly.

JP2006 073457A discloses a pouch type battery comprising a battery element covered by an insulating sheet having slits for accommodating the tabs.

The present disclosure relates to a battery cell having improved safety by providing an integrally formed insulator to an upper portion of a pouch.

In addition, the present disclosure is to provide a battery cell to increase productivity and to reduce quality variation by forming an existing insulator formed as various parts as an integrally formed type.

The present disclosure also relates to a battery cell having an insulating member formed with ridged and planar portions.

According to the invention there is provided a battery cell according to claim 1. The insulating member may be integrally formed.

The pouch may include a sealing lip at a top surface thereof, wherein the electrode tabs extend through the sealing lip and the ridged portion may be arranged over the sealing lip. The sealing lip may extend inside the ridged portion.

The first and second slits may be symmetrically disposed along the top of the ridged portion. The first and second slits may be disposed on either side of an imaginary centre line running along the top of the ridged portion.

The electrode tabs may be insulated from the pouch by insulating tape wrapped around the electrode tabs at the position where the electrode tabs pass through the pouch.

The insulating member may further comprise an adhesive layer for fixing the planar portions to the top surface of the pouch. The adhesive layer may comprise an aromatic polyamide based-compound, polyimide-based compound or a polypropylene-based compound.

The insulating member may comprise a double-sided tape.

The insulating member may comprise a planar insulating sheet folded along a plurality of bending lines to form the ridged portion between the first and second planar portions.

According to another aspect of the invention, there is provided a method of manufacturing a battery cell according to claim 12.

Embodiments of the invention will now be described by way of example with reference to the accompanying drawings, in which:
Fig. 1 is a perspective view of a battery pack not being part of the invention.
Fig. 2 is an exploded perspective view of Fig.1.
Fig. 3A is an enlarged perspective view of the insulator of Fig. 2
Fig. 3B is a plan view of Fig.3A before folding.
Fig. 4 is a perspective view of a battery pack according to an embodiment of the present invention.
Fig. 5A is an enlarged perspective view of the insulator of Fig.4.
Fig. 5B is a plan view of Fig. 5A before folding.
Fig. 6 is a perspective view of a battery pack according to a second embodiment of the present invention.
Fig. 7A is an enlarged perspective view of the insulator of Fig. 6.
Fig. 7B is a plan view of Fig. 7A before folding.

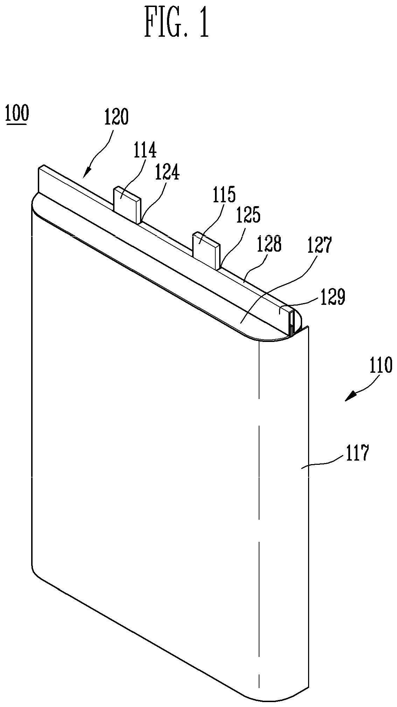

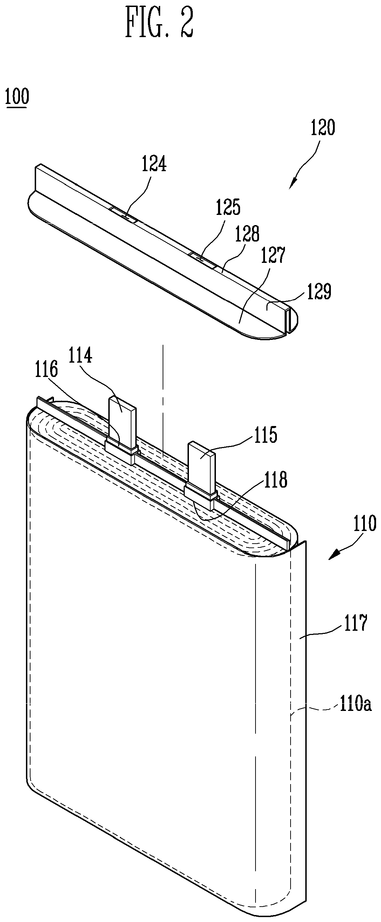

Referring to Figs. 1 and 2, a battery cell comprises an electrode assembly (not shown), a pouch 117 accommodating the electrode assembly, an electrode lead, or tab, 114, 115 connected with the electrode assembly and extending to the outside of the pouch 117, a slit section 124, 125 that the electrodes 114, 115 pass through and an isolator, or insulating member, 120 covering at least portion of the pouch 117 and the electrode lead 114, 115.

The electrode assembly may include a first electrode plate (not shown) and a second electrode plate (not shown) and a separator (not shown) interposed between the electrode plates. When the first electrode plate is an anode plate and the second electrode plate is a cathode plate, ions or electrons move between the first electrode plate and second electrode plate, thereby generating electro-chemical energy.

The first electrode plate may be formed by coating an anode active material on both surfaces or a single surface of the plate.

Generally, the anode active material is a material having a high conductivity, which is not particularly limited if a chemical-induced change does not occur.

In addition, the anode active material contains a layered compound of lithium.

The second electrode plate may be formed by coating the cathode active material on the one surface or both sides of the anode current collector.

When the electrode plates have opposite polarity, the separator may be interposed between the electrode plates, so that the electrode plates are not in direct contact to prevent a short.

For example, the separator may be formed of polymeric material and the insulating thin film having high ion permeability and a mechanical strength may be used. Meanwhile, the pouch 117 accommodates and seals an electrode assembly and electrolyte (not shown).

The electrolyte housing the pouch 117 may includes lithium salts serving as a supply source of lithium ions and a non-aqueous organic solvent serving as a medium for the movement of ions involved in an electro-chemical reaction.

The first electrode plate (not shown) and the second electrode plate (not shown) included in the electrode assembly react with the electrolyte to generate electro-chemical energy and the generated electro-chemical energy may be transferred through the first electrode tab 114 and the second electrode tab 115 to the outside.

In addition, parts of the first electrode tab 114 and the second electrode tab 115 that extend to the upper end portion of the pouch 117 are provided with an insulating tape 116 for preventing a short with the pouch 117, that includes metal. The pouch is sealed around the insulating tape to form a sealing lip at the top of the pouch.

The invention encompasses different types of electrode assemblies, including wound and stacked assemblies.

The pouch 117 accommodating the electrode assembly is formed by inserting a metal such as aluminium (Al) between high molecular weight layers. The pouch 117 may be a square shape but is not limited to this.

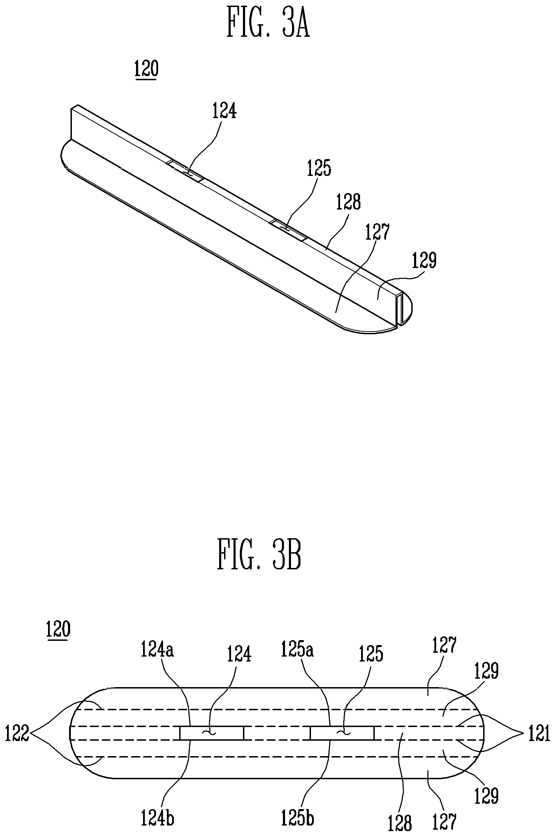

The insulator will be described with reference to Fig. 3A and 3B.

Referring to Fig. 3A, the insulator 120 is integrally formed and comprises a planar portion 127 and a ridged portion 128, 129. It covers an area in which the boundary 118 of the first electrode lead 114 or the second electrode 115 and the pouch 117 is formed.

Herein, the insulator 120 includes a first slit 124 and a second slit 125 formed in the top 128 of the ridged portion that the first electrode tab 114 and the second electrode tab 125 can pass through. The ridged portion accommodates the sealing lip formed around the electrode tabs 114, 115.

The flat, or planar, surface 127 facing the pouch 117 of the insulator 120 may be an oval shape having the long axis and the short axis, but is not limited to this and may have various shapes.

For example, the flat surface may be rectangular having the long side and the short side.

Referring to Fig. 3B, the insulator 120 includes the bending lines 121, 122 parallel to the long axis.

Among this, the first bending line 121 includes the longitudinal outline of the first slit 124 and the second slit 125.

That is, the first bending line 121 comprises two parallel lines, a first line extending through and connecting one side 124a of the first slit portion 124 and one side 125a of the second slit portion 125 and a second line extending through and connecting the other side 124b of the first slit portion 124 and the other side 125b of the second slit portion 125.

Meanwhile, the second bending line 122 is formed so that when bent a ridged portion is formed and the sides of the ridge 129 run alongside respective sides of the first electrode lead 114 and the second electrode lead 115.

Herein, the insulator 120 further includes an adhesive layer (not shown), wherein the adhesive layer is provided between the insulator and the pouch 117.

Alternatively, the insulator 120 may be a double-sided tape which is not provided with the adhesive layer, in which case the insulator 120 may be a tape consisting at least of tape aromatic polyamide based-compound, polyimide-based compound or polypropylene-based compound.

As described above, the pouch 117 accommodating the electrode assembly may be formed by inserting a metal layer such as aluminium (Al) between high molecular weight layers, eg. resin layers.

Therefore, in some cases, the metal within the pouch 117 may be exposed. However, as an embodiment of the present invention, when the portion of the pouch 117 and the electrode lead 115 is covered with the integrally formed insulator 120, for example the sealing lip is covered, exposure of the metal within the pouch can be prevented.

Therefore, the battery cell having improved safety is provided. In addition, by forming an existing insulator formed as various parts in an integral form, productivity can be improved and quality variation reduced.

The insulator according to a first embodiment of the present invention will be mainly described with regard to differences from the first embodiment.

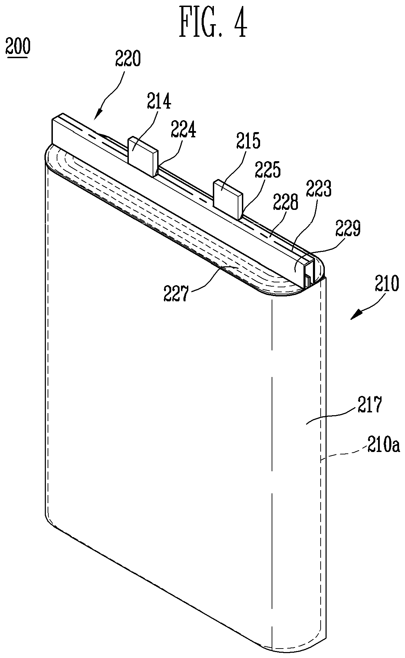

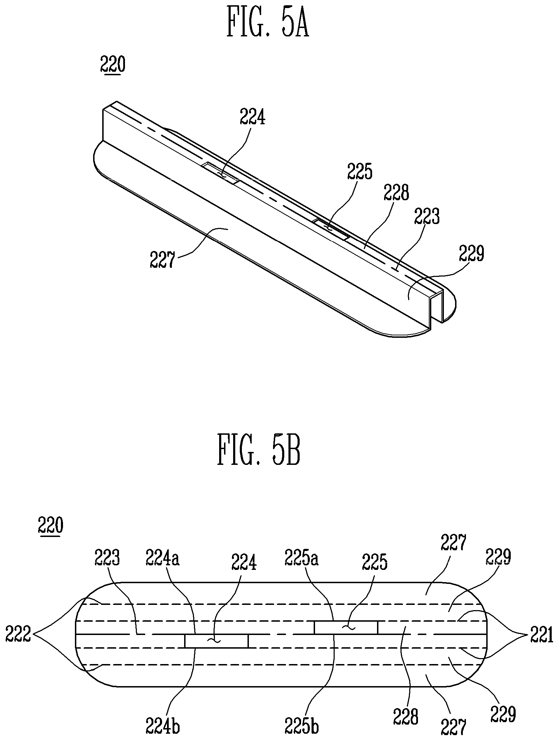

Fig.4 is a perspective view of a battery cell according to an embodiment of the present invention. Fig.5A is an expanded perspective view of the insulator of Fig.4.

Referring to Fig. 4, the pouch 217 accommodates and seals the electrode assembly (not shown) and electrolyte (not shown).

The electrolyte accommodated in the pouch 217 may includes lithium salts serving as a supply source of lithium ions and a non-aqueous organic solvent serving as a medium for the movement of ions involved in an electro-chemical reaction. A part of the first electrode lead 214 and the second electrode lead 215 that extend to the upper end portion of the electrode assembly 210a is provided with an insulating tape (not shown) for preventing a short with the pouch 217 that includes metal.

Herein, the first electrode lead 214 and the second electrode lead 215 are not located on the same line and are staggered by a thickness of the first electrode lead 214 or the second electrode lead 215 unlike the first embodiment.

Referring to Fig.5A, a sealing part 228 of the insulator 220 includes a first slit 224 and a second slit 225 which the first electrode lead 214 and the second lead 215 correspondingly pass through as in the first embodiment.

The flat surface 227 of the insulator 220 facing the bare cell 210 may be an oval shape having the long axis and the short axis, but may have various shapes, without being limited to the oval shape.

For example, the flat surface 227 may be rectangular having the long side and the short side.

Further, an extension part 229 is provided between the flat surface 227 and the sealing part 228 to cover the first electrode lead 214, the second electrode lead 215, and the insulating tape (not shown). The extension parts 229 together with the sealing part 228 together form a ridge or ridged portion extending from the planar portion 227.

Referring to Fig. 5B, the insulator 220 includes the bending lines 221, 222 parallel to the long axis and a third extension line, or centre line, 223.

First, a third virtual extension line 223 connecting one side 224a of an outline of the first slit section 224 and other side 225b of a outline of the second slit section 225 is a straight line.

That is, the first electrode 214 and the second electrode lead 215 according to a second embodiment of the present invention is not located on the same line and is staggered by a thickness of the first electrode lead 214 or the second electrode lead 215 unlike the first embodiment and the third extension line 223 is a straight line.

The first bending line 221 comprises two lines, which are spaced from the centre line 223 by the thickness of the first electrode lead 214 and the second electrode lead 215 respectively.

Meanwhile, the second bending line 222 is formed to be consistent with the boundary of the first electrode lead 214 or the second electrode 215 and the pouch 217.

That is, the second line 222 is made of two lines, with which the boundary of one side of the first electrode 214 or the second electrode 215 and the pouch 217 is formed to be coincident or the boundary of the other side of a second electrode 215 and the pouch 217 is formed to be coincident. In other words, the second bending lines 222 are formed so that when bent a ridged portion is formed and the sides of the ridge run alongside respective outer sides of the first electrode lead 214 and the second electrode lead 215.

According to the battery cell 200 alignment of the first electrode tab 214 and the second electrode tab 215 is easier than the first case. Even if a task baseline is slightly skewed or the pouch located on one side of the cathode lead is exposed in the attachment process as a worker applies pressure to the insulator, the short of the battery cell can be prevented because the insulator can slightly cover the side of second lead, which is the cathode lead, thereby improving productivity and reducing a quality variation.

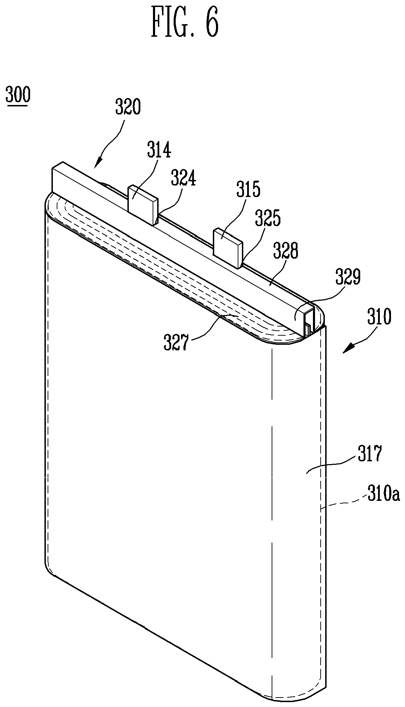

Hereinafter, an insulator according to a second embodiment of the present disclosure will be described with reference to Figs. 6 to 7B, focusing on differences from those of the first case and first embodiment. Referring to Fig. 6, the pouch 317 according to the second embodiment accommodates and seals a bare cell including the electrode assembly 310a and an electrolyte (not shown) in the same manner as those in the first embodiment. The electrolyte accommodated in the pouch 317 may include lithium salt serving as a supply source of lithium ions and a non-aqueous organic solvent serving as a medium for the movement of ions involved in an electro-chemical reaction. A first electrode plate (not shown) and a second electrode plate (not shown) forming the electrode assembly 310a react with the electrolyte to generate electro-chemical energy and the generated electro-chemical energy may be transferred to the outside through the first electrode lead 314 and the second electrode lead 315. In addition, parts of the first electrode lead 314 and the second electrode lead 315 which project out from the upper end portion of the electrode assembly 310a are provided with an insulating tape (not shown) for preventing a short with the pouch 317 including metal. Herein, unlike in the first first case, the first electrode lead 314 and the second electrode lead 315 according to the second embodiment are not located in the same line. Further, unlike in the first embodiment, the first electrode 314 and the second electrode lead 315 are not alternately disposed. In the second embodiment, the first electrode lead 314 and the second electrode lead 315 are disposed such that extension areas of the first electrode lead 314 and the second electrode lead 315 partly overlap with each other. In other words, a line drawn through an inner edge of one electrode lead will pass through the other electrode lead.

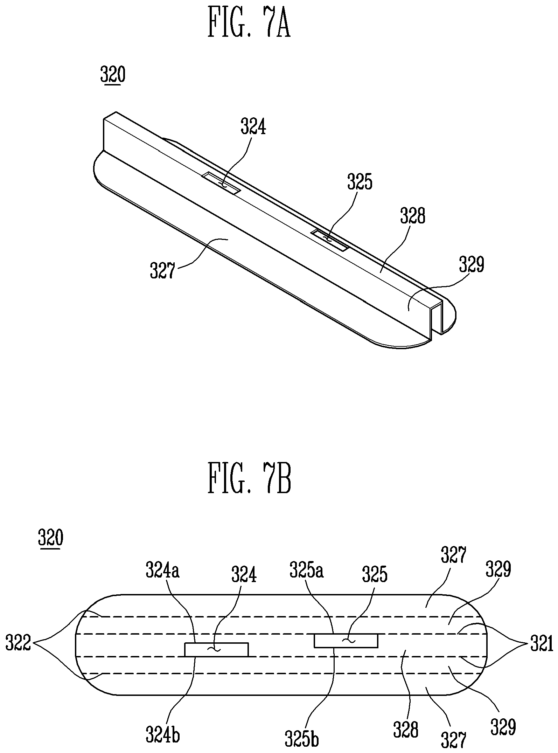

Referring to Fig.7A, a sealing part 328 of the insulator 320 according to the second embodiment of the present invention includes a first slit 324 and a second slit 325 which the first electrode lead 314 and the second electrode lead 315 correspondingly pass through, respectively, as in the first embodiment. The flat surface 327 of the insulator 320 facing the bare cell 310 may be in an oval shape having the long axis and the short axis in the embodiments of the present disclosure but may has various shapes without being limited to the oval shape. For example, the flat surface 327 may be in a rectangular shape having the long side and the short side.

Further, an extension part 329 is provided between the flat surface 327 and the sealing part 328 to cover the first electrode lead 314, the second electrode lead 315, and the insulating tape (not shown).

Referring to Fig. 7B, the insulator 320 according to the second embodiment of the present disclosure includes bending lines 321 and 322 parallel with the long axis. The first electrode lead 314 and the second electrode lead 315 are not located in the same line in the second embodiment. Further, unlike in the first embodiment, the first electrode 314 and the second electrode lead 315 are not alternately disposed. In the second embodiment, the first electrode lead 314 and the second electrode lead 315 are disposed such that extension areas of the first electrode lead 314 and the second electrode lead 315 partly overlap with each other ie. longitudinal projections of the slits would overlap one another.

The extension parts 329 are formed between the first and second bending lines 321, 322. One of the first bending lines is formed to include one border of the first electrode lead 314 in the lengthwise direction of the first electrode lead 314 and the other of the first bending lines is formed to include one border of the second electrode lead 315.

Meanwhile, the second bending lines 322 are formed to correspond to the boundaries between the first electrode lead 314 or the second electrode 315 and the bare cell. That is, the second bending lines 322 are formed of two bending lines, one of which is formed to correspond to the boundary between one side of the first electrode lead 314 or the second electrode lead 315 and the bare cell 310 and the other which is formed to correspond to the boundary between another side of the first electrode lead 314 or the second electrode lead 315 and the bare cell 310.

In the battery cell 300 according to the second embodiment, it is easier to align the first electrode lead 314 and the second electrode lead 315 than in the first case. Further, even though a task baseline for an attachment process slightly inclines or one portion of the pouch at the cathode lead is exposed by pressure applied by a worker to the insulator, the insulator 320 can slightly cover a side of the second electrode lead, the cathode lead, thereby preventing short of the battery cell. In addition, the insulator 320 is properly aligned on and attached to the upper side of the bare cell 310 to reduce errors in the attachment process, thus improving productivity and decreasing quality variations.

As described above, according to the present invention, the upper surface of the pouch is covered with the integral type insulator so that an exposure of metal within the case is prevented, thereby providing a battery cell having improved safety.

In addition, by forming the existing insulator formed in various parts as an integral form, productivity can be improved and quality variation reduced.

While the present invention has been described in connection with certain exemplary embodiments, it is to be understood that the invention is not limited to the disclosed embodiments, but, on the contrary, is intended to cover various modifications and equivalent arrangements included within the scope of the appended claims. It is to be understood that the various embodiments of the invention, although different from one another, are not necessarily mutually exclusive. For example, a particular feature, structure or characteristic described herein in connection with one embodiment may be implemented within other embodiments.

## Claims

1. A battery cell (100, 200) comprising:
a pouch (117, 217, 317) containing an electrode assembly and electrode tabs (114, 115; 214, 215; 314, 315) extending out of a top surface of the pouch; and
an insulating member (120, 220, 320) having first and second parallel planar portions (127, 227, 327) for mounting to the top surface of the pouch and a ridged portion extending between the planar portions, the ridged portion including first and second slits (124, 125; 224, 225; 324, 325) for receiving the electrode tabs, wherein the first and second planar portions are respectively seated on the top surface of the pouch on either side of the electrode tabs, wherein the first and second slits are disposed on opposites sides of an imaginary line running along the top of the ridged portion in a longitudinal direction.

2. The battery cell of claim 1, wherein the insulating member is integrally formed.

3. The battery cell of claim 1 or 2, wherein the pouch includes a sealing lip at a top surface thereof, wherein the electrode tabs extend through the sealing lip; and
the ridged portion is arranged over the sealing lip.

4. The battery cell of claim 3, wherein the sealing lip extends inside the ridged portion.

5. The battery cell of any one of the preceding claims, wherein the first and second slits are symmetrically disposed along the top of the ridged portion.

6. The battery cell of any one of claims 1 to 4, wherein the first and second slits (224, 225) are disposed on either side of an imaginary centre line (223) running along the top of the ridged portion.

7. The battery cell of any one of the preceding claims, wherein the electrode tabs are insulated from the pouch by insulating tape (116) wrapped around the electrode tabs at the position where the electrode tabs pass through the pouch.

8. The battery cell of any one of the preceding claims, wherein the insulating member further comprises an adhesive layer for fixing the planar portions to the top surface of the pouch.

9. The battery cell of claim 8, wherein the adhesive layer comprises an aromatic polyamide based-compound, polyimide-based compound or a polypropylene-based compound.

10. The battery cell of any one of claims 1 to 7, wherein the insulating member comprises a double-sided tape.

11. The battery cell of any one of the preceding claims, wherein the insulating member comprise a planar insulating sheet folded along a plurality of bending lines to form the ridged portion between the first and second planar portions (127, 227).

12. A method of manufacturing a battery cell, comprising:
sealing an electrode assembly into a pouch (117, 217, 317), with electrode tabs (114, 115; 214, 215; 314, 315) extending out of the top surface of the pouch;
folding a planar insulating sheet into an insulating member (120, 220, 320) by folding the insulating sheet along a plurality of bending lines to form a ridged portion between first and second parallel planar portions (127, 227, 327);
mounting the insulating member on the top surface of the sealed pouch such that the first and second planar portions are respectively seated on the top surface of the pouch on either side of the electrode tabs; and
passing the electrode tabs through corresponding slits disposed on opposites sides of an imaginary line running along the top of the ridged portion in a longitudinal direction.

## Patentansprüche

1. Batteriezelle (100, 200), umfassend:
eine Tasche (117, 217, 317), die eine Elektrodenanordnung und Elektrodenstreifen (114, 115; 214, 215; 314, 315), die sich aus einer oberen Oberfläche der Tasche heraus erstrecken, enthält; und
ein Isolierelement (120, 220, 320), das einen ersten und zweiten planen Abschnitt (127, 227, 327), die parallel sind, zum Anbringen an der oberen Oberfläche der Tasche und einen Rippenabschnitt, der sich zwischen den planen Abschnitten erstreckt, aufweist, wobei der Rippenabschnitt einen ersten und zweiten Schlitz (124, 125; 224, 225; 324, 325) zum Aufnehmen der Elektrodenstreifen umfasst, wobei der erste und zweite plane Abschnitt jeweils auf einer der beiden Seiten der Elektrodenstreifen auf der oberen Oberfläche der Tasche aufliegen, wobei der erste und zweite Schlitz auf gegenüberliegenden Seiten einer gedachten Linie angeordnet sind, die in Längsrichtung entlang der Oberseite des Rippenabschnitts verläuft.

2. Batteriezelle nach Anspruch 1, wobei das Isolierelement einstückig ausgebildet ist.

3. Batteriezelle nach Anspruch 1 oder 2, wobei die Tasche an ihrer oberen Oberfläche eine Dichtungslippe umfasst, wobei die Elektrodenstreifen sich durch die Dichtungslippe hindurch erstrecken; und
der Rippenabschnitt über der Dichtungslippe angeordnet ist.

4. Batteriezelle nach Anspruch 3, wobei die Dichtungslippe sich im Inneren des Rippenabschnitts erstreckt.

5. Batteriezelle nach einem der vorangehenden Ansprüche, wobei der erste und zweite Schlitz symmetrisch entlang der Oberseite des Rippenabschnitts angeordnet sind.

6. Batteriezelle nach einem der Ansprüche 1 bis 4, wobei der erste und zweite Schlitz (224, 225) auf jeder der beiden Seiten einer gedachten Mittellinie (223) angeordnet sind, die entlang der Oberseite des Rippenabschnitts verläuft.

7. Batteriezelle nach einem der vorangehenden Ansprüche, wobei die Elektrodenstreifen durch Isolierband (116), das an der Stelle, wo die Elektrodenstreifen durch die Tasche hindurch verlaufen, um die Elektrodenstreifen gewickelt ist, von der Tasche isoliert sind.

8. Batteriezelle nach einem der vorangehenden Ansprüche, wobei das Isolierelement ferner eine Klebeschicht zum Befestigen der planen Abschnitte an der oberen Oberfläche der Tasche umfasst.

9. Batteriezelle nach Anspruch 8, wobei die Klebeschicht eine aromatische Verbindung auf Basis von Polyamid, Verbindung auf Basis von Polyimid oder eine Verbindung auf Basis von Polypropylen umfasst.

10. Batteriezelle nach einem der Ansprüche 1 bis 7, wobei das Isolierelement ein doppelseitiges Band umfasst.

11. Batteriezelle nach einem der vorangehenden Ansprüche, wobei das Isolierelement eine plane Isolierfolie umfasst, die entlang einer Mehrzahl von Biegelinien gefaltet ist, um den Rippenabschnitt zwischen dem ersten und zweiten planen Abschnitt (127, 227) auszubilden.

12. Verfahren zur Herstellung einer Batteriezelle, umfassend:
dichtes Einschließen einer Elektrodenanordnung in eine Tasche (117, 217, 317), wobei Elektrodenstreifen (114, 115; 214, 215; 314, 315) sich aus der oberen Oberfläche der Tasche heraus erstrecken;
Falten einer planen Isolierfolie zu einem Isolierelement (120, 220, 320) durch Falten der Isolierfolie entlang einer Mehrzahl von Biegelinien, um einen Rippenabschnitt zwischen einem ersten und zweiten planen Abschnitt (127, 227, 327), die parallel sind, auszubilden;
Anbringen des Isolierelements auf einer oberen Oberfläche der abgedichteten Tasche derart, dass der erste und zweite plane Abschnitt jeweils auf einer der beiden Seiten der Elektrodenstreifen auf der oberen Oberfläche der Tasche aufliegen; und
Führen der Elektrodenstreifen durch entsprechende Schlitze, die auf gegenüberliegenden Seiten einer gedachten Linie angeordnet sind, die in Längsrichtung entlang der Oberseite des Rippenabschnitts verläuft.

## Revendications

1. Élément de batterie (100, 200) comprenant :
une poche (117, 217, 317) contenant un ensemble d'électrodes et des languettes d'électrodes (114, 115 ; 214, 215 ; 314, 315) s'étendant hors d'une surface supérieure de la poche ; et
un élément isolant (120, 220, 320) ayant des première et deuxième parties planaires parallèles (127, 227, 327) destinées à être montées sur la surface supérieure de la poche et une partie nervurée s'étendant entre les parties planaires, la partie nervurée comportant des première et deuxième fentes (124, 125 ; 224, 225 ; 324, 325) pour recevoir les languettes d'électrodes, où les première et deuxième parties planaires sont respectivement placées sur la surface supérieure de la poche de part et d'autre des languettes d'électrodes, où les première et deuxième fentes sont disposées sur des côtés opposés d'une ligne imaginaire s'étendant le long de la partie supérieure de la partie nervurée dans une direction longitudinale.

2. Élément de batterie de la revendication 1, dans lequel l'élément isolant est formé monobloc.

3. Élément de batterie de la revendication 1 ou 2, dans lequel la poche comporte une lèvre d'étanchéité au niveau d'une surface supérieure de celle-ci, où les languettes d'électrodes s'étendent à travers la lèvre d'étanchéité ; et
la partie nervurée est agencée sur la lèvre d'étanchéité.

4. Élément de batterie de la revendication 3, dans lequel la lèvre d'étanchéité s'étend à l'intérieur de la partie nervurée.

5. Élément de batterie de l'une quelconque des revendications précédentes, dans lequel les première et deuxième fentes sont disposées symétriquement le long de la partie supérieure de la partie nervurée.

6. Élément de batterie de l'une quelconque des revendications 1 à 4, dans lequel les première et deuxième fentes (224, 225) sont disposées de part et d'autre d'une ligne médiane imaginaire (223) s'étendant le long de la partie supérieure de la partie nervurée.

7. Élément de batterie de l'une quelconque des revendications précédentes, dans lequel les languettes d'électrodes sont isolées de la poche par un ruban isolant (116) enroulé autour des languettes d'électrodes à la position où les languettes d'électrodes passent à travers la poche.

8. Élément de batterie de l'une quelconque des revendications précédentes, dans lequel l'élément isolant comprend en outre une couche adhésive pour fixer les parties planaires à la surface supérieure de la poche.

9. Élément de batterie de la revendication 8, dans lequel la couche adhésive comprend un composé à base de polyamide aromatique, un composé à base de polyimide ou un composé à base de polypropylène.

10. Élément de batterie de l'une quelconque des revendications 1 à 7, dans lequel l'élément isolant comprend un ruban double face.

11. Élément de batterie de l'une quelconque des revendications précédentes, dans lequel l'élément isolant comprend une feuille isolante planaire pliée le long d'une pluralité de lignes de flexion pour former la partie nervurée entre les première et deuxième parties planaires (127, 227).

12. Procédé de fabrication d'un élément de batterie, comprenant le fait :
de sceller un ensemble d'électrodes dans une poche (117, 217, 317), avec des languettes d'électrodes (114, 115 ; 214, 215 ; 314, 315) s'étendant hors de la surface supérieure de la poche ;
de plier une feuille isolante planaire en un élément isolant (120, 220, 320) en pliant la feuille isolante le long d'une pluralité de lignes de flexion pour former une partie nervurée entre des première et deuxième parties planaires parallèles (127, 227, 327) ;
de monter l'élément isolant sur la surface supérieure de la poche scellée de sorte que les première et deuxième parties planaires soient respectivement placées sur la surface supérieure de la poche de part et d'autre des languettes d'électrodes ; et
de faire passer les languettes d'électrodes à travers des fentes correspondantes disposées sur des côtés opposés d'une ligne imaginaire s'étendant le long de la partie supérieure de la partie nervurée dans une direction longitudinale.
